# EUROPÄISCHE PATENTSCHRIFT

(11) **EP 3 569 976 B1**
(45) Veröffentlichungstag und Bekanntmachung des Hinweises auf die Patenterteilung: **05.07.2023**
(21) Anmeldenummer: 18172550.8
(22) Anmeldetag: 16.05.2018
(51) Int. Cl.: G01B 11/30, G01B 7/00

(54) **RAUHEITSMESSTASTER, VORRICHTUNG MIT RAUHEITSMESSTASTER UND ENTSPRECHENDE VERWENDUNG**
ROUGHNESS PROBE, APPARATUS WITH SAID ROUGHNESS PROBE AND RESPECTIVE USE
TÊTE DE MESURE DE RUGOSITÉ, DISPOSITIF AVEC LADITE TÊTE DE MESURE ET UTILISATION CORRESPONDANTE

(43) Veröffentlichungstag der Anmeldung: 20.11.2019
(73) Patentinhaber: Klingelnberg GmbH, 42499 Hückeswagen (DE)
(72) Erfinder: Mies, Georg, 51688 Wipperführt (DE)
(74) Vertreter: Janke Scholl Patentanwälte PartG mbB

(56) Entgegenhaltungen:
- DE-A1- 19 739 885
- DE-A1-102006 026 775
- DE-A1-102012 101 394
- US-A- 5 757 496
- US-A- 6 163 973

## Beschreibung

Die Erfindung betrifft einen Rauheitsmesstaster, eine Vorrichtung mit einem solchen Rauheitsmesstaster und eine entsprechende Verwendung.

### HINTERGRUND DER ERFINDUNG

In vielen technischen Bereichen ist die Oberflächenstruktur eines Bauteils oder Materials ein wichtiges Qualitätsmerkmal.

Es gibt daher unterschiedlichste Rauheitsmessvorrichtungen zum Erfassen der Rauheit bzw. Rauhtiefen von Oberflächen. Typischerweise wird eine mechanische Abtastung vorgenommen, bei der eine Tastspitze über die Oberfläche geführt wird. Das Ergebnis ist ein über den Tastweg aufgezeichnetes Höhensignal, das auch als Oberflächenprofil bezeichnet wird.

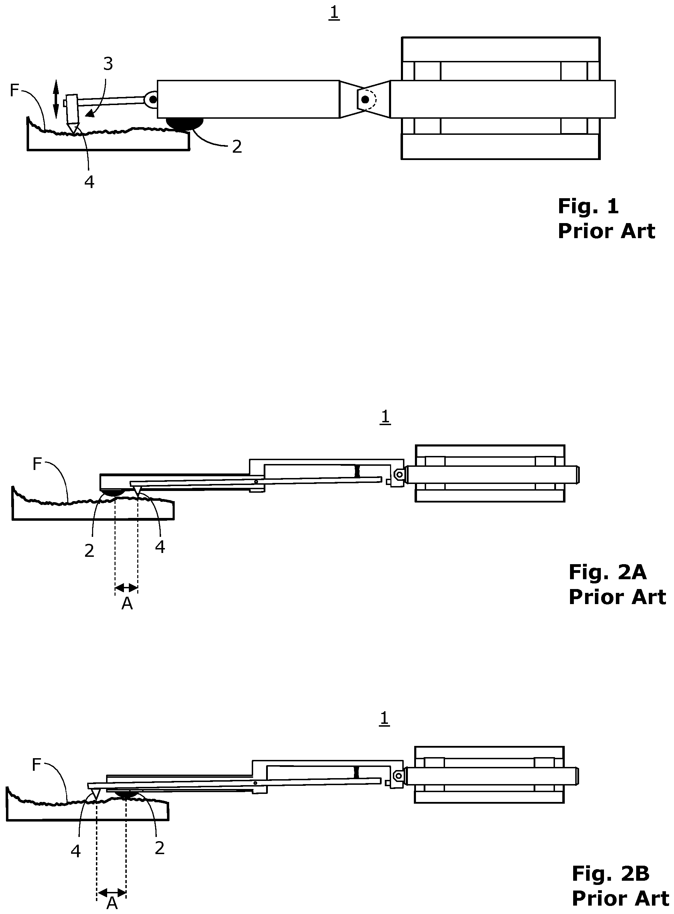

Es sind Gleitkufentaster 1 bekannt, wie in Fig. 1 in schematisierter Form gezeigt. Ein Gleitkufentaster 1 hat eine Gleitkufe 2, die je nach Anwendungsgebiet einen grossen oder kleinen Radius hat und die als Gleitelement dient. Die Tastspitze 4 eines Tasters 3 liegt mit der Gleitkufe 2 auf einer zu messenden Oberfläche F auf und erfasst mit der Tastspitze 4 das Oberflächenprofil relativ zur Bahn der Gleitkufe 2. Die Gleitkufe 2 folgt während der Messung den makroskopischen Unebenheiten der Oberfläche F, also der Welligkeit und makroskopischen Form. Die Tastspitze 4 hingegen erfasst mit ihrem kleinen Spitzenradius die Oberflächenrauheit und ertastet z.B. Riefen, die von der Gleitkufe 2 überbrückt wurden, da diese einen weit grösseren wirksamen Radius aufweist. Die Gleitkufe 2 wirkt somit als eine Art mechanischer Hochpassfilter.

Aus der publizierten Patentanmeldung WO2010079019A2 (siehe auch EP-Patent EP2199732 B1) ist ein verbesserter Gleitkufentaster bekannt. Dieser Gleitkufentaster ist in Fig. 2A in einer entsprechenden Funktions-Ansicht gezeigt. Um den verbesserten Gleitkufentaster der Fig. 2A mit der Lösung der Fig. 1 vergleichen zu können, wurden hier dieselben Bezugszeichen verwendet. Das Gleitelement 2 ist am extremalen Ende eines Taststifts angeordnet. Ein Taster mit der Tastspitze 4 ist in den Taststift integriert, wobei der Abstand A zwischen dem Gleitelement 2 und der Tastspitze 4 fest vorgegeben ist.

Ein weiterer beispielhafter Gleitkufentaster 1 ist in Fig. 2B gezeigt. Der Gleitkufentaster 1 der Fig. 2B basiert auf dem Grundprinzip der Fig. 2A. Anders als in Fig. 2A ist hier jedoch die Reihenfolge von Tastspitze 4 und Gleitelement 2 umgekehrt. Bei dem in Fig. 2B gezeigten Beispiel liegt die Tastspitze 4 vor Gleitelement 2. Auch hier ist der Abstand A zwischen dem Gleitelement 2 und der Tastspitze 4 fest vorgegeben. DE 10 2012 101394 A1 offenbart ebenballs einen Gleitkufentaster mit einem Taststift und einem Gleitelement.

Gleitkufentaster können teilweise verfälschte Ergebnisse liefern. Dies ist zum Beispiel dann der Fall, wenn sich die Bewegung der Gleitkufe 2 mit der Bewegung der Tastspitze 4 konstruktiv überlagert und damit ein zu grosses Ausgangssignal geliefert wird, oder wenn sich die Bewegungen ganz oder teilweise auslöschen und dadurch ein zu kleines Signal geliefert wird.

Andere Probleme treten zum Beispiel beim Messen der Oberflächeneigenschaften von Zahnflanken auf. Einerseits sind die bisherigen Gleitkufentaster nicht dazu geeignet, weit in die Zahnlücken von kleinmoduligen Zahnrädern einzutauchen. Andererseits läuft das Gleitelement 2 ins Leere, wenn der Zahnkopf einer Zahnflanke erreicht wird. Daher kann man die Topografie von Zahnflanken nicht bis nahe an den Zahnkopf heran messen. Eine Lösung gemäß Fig. 2A ist nicht geeignet, da die Tastspitze 4 beim Erreichen des Zahnkopfes in Leere läuft. Bei einer Lösung nach Fig. 2B hingegen würde die Gleitkufe 2 beim Erreichen des Zahnkopfes ins Leere laufen.

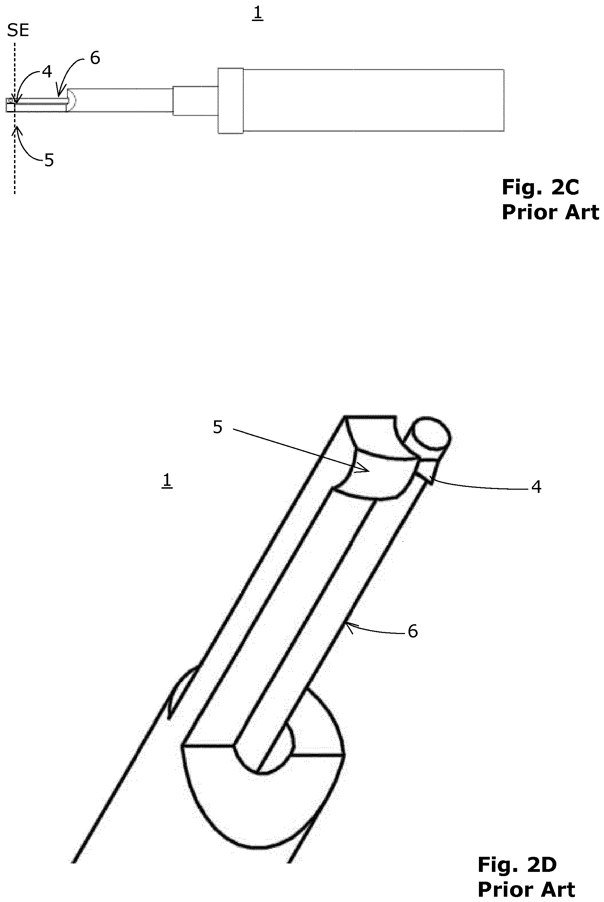

Aus der publizierten Patentanmeldung EP3228974A1 ist ein Rauheitsmesstaster bekannt, der eine seitliche Kufe umfasst. Ein entsprechender Rauheitsmesstaster 1 ist in den Figuren 2C und 2D gezeigt. Fig. 2C zeigt eine Seitenansicht und Fig. 2D zeigt den vorderen Bereich des Rauheitsmesstasters 1 schräg von unten. Dieser Rauheitsmesstaster 1 umfasst eine seitliche Gleitkufe 5 und eine Tastspitze 4. Die Tastspitze 4 sitzt im Bereich des extremalen Endes eines Tastarms 6. Die Gleitkufe 5 sitzt seitlich möglichst nah neben der Tastspitze 4, d.h. die Gleitkufe 5 und die Tastspitze 4 liegen beide in derselben Ebene SE (cf. Fig. 2C).

Aufgrund des sehr kleine Spitzenradius der Tastspitzen 4, die in den vorbekannten Tastsystemen zum Einsatz kommen, sind diese relativ empfindlich und neigen daher zur Abnutzung oder, falls unkontrollierte Bewegungen ausgeführt werden, zur Zerstörung.

Außerdem sind die vorbekannten Tastsysteme nicht in allen Situationen einsetzbar, da sie aufgrund der Baugrösse nicht bis in Ecken oder Kanten geführt werden können.

Es ist eine Aufgabe der Erfindung einen Rauheitsmesstaster bereit zu stellen, der es ermöglicht Rauheitsmessungen auch an kleinmoduligen Zahnrädern und an anderen 3-dimensionalen Strukturen durchzuführen, wobei die Oberfläche möglichst schnell und mit hoher Genauigkeit gemessen werden soll.

Ausserdem geht es darum eine (Mess-)Vorrichtung mit einem geeigneten Rauheitsmesstaster bereit zu stellen, die es ermöglicht verbesserte automatisierte Rauheitsmessungen z.B. an Zahnradflanken durchzuführen. Weiterhin geht es um die Verwendung eines solchen Rauheitsmesstasters.

Die Aufgabe wird durch einen Rauheitsmesstaster gemäß Anspruch 1, eine Vorrichtung (Koordinatenmesssystem) gemäß Anspruch 10 und durch eine Verwendung eines Rauheitsmesstasters gemäß Anspruch 11 gelöst.

Ein erfindungsgemäßer Rauheitsmesstaster umfasst eine integrierend wirkende Vorrichtung und eine optische Abtastvorrichtung, wobei die optische Abtastvorrichtung unmittelbar an oder in der integrierend wirkenden Vorrichtung angeordnet ist.

Der Rauheitsmesstaster ist speziell zum Abtasten einer Oberfläche ausgelegt und umfasst eine integrierend wirkende Vorrichtung und eine optische Abtastvorrichtung. Die optische Abtastvorrichtung ist unmittelbar an oder in der integrierend wirkenden Vorrichtung angeordnet. Die integrierend wirkende Vorrichtung ist dazu ausgelegt beim Abtasten der Oberfläche einen mittleren Abstand zwischen dem Rauheitsmesstaster und einem größeren Bereich der Oberfläche vorzugeben. Die optische Abtastvorrichtung ist hingegen dazu ausgelegt einen kleineren Bereich der Oberfläche berührungslos optisch abzutasten.

Erfindungsgemäß umfasst die integrierend wirkende Vorrichtung eine optische Anordnung, die als virtuelle Gleitkufe so ausgebildet ist, dass diese mindestens einen Lichtfleck auf der Oberfläche abbildet. Es ist ein Vorteil dieser Ausführungsformen, dass es zu keiner Berührung von Rauheitsmesstaster und Oberfläche kommt. Diese Vorrichtungen arbeiten somit komplett berührungslos.

Bei mindestens einem Teil der Ausführungsformen des Rauheitsmesstasters, die ein virtuelle Gleitkufe umfassen ist die optische Anordnung dazu ausgelegt mindestens zwei Lichtflecken so auf der Oberfläche abzubilden, dass eine Bezugslinie oder Bezugsebene des Rauheitsmesstaster äquidistant positionierbar ist.

Bei mindestens einem Teil der Ausführungsformen des Rauheitsmesstasters, die ein virtuelle Gleitkufe mit mindestens zwei Lichtflecken umfassen, sind mehrere NC-gesteuerte Achsen und eine Steuerung vorhanden, die es ermöglichen eine äquidistante Position der Bezugslinie oder Bezugsebene relativ zu der Oberfläche einzuhalten.

Bei mindestens einem Teil der Ausführungsformen des Rauheitsmesstasters, die ein virtuelle Gleitkufe umfassen, ist die optische Abtastvorrichtung dazu ausgelegt nach dem äquidistanten Positionieren den kleineren Bereich der Oberfläche berührungslos optisch abzutasten.

Bei mindestens einem Teil der Ausführungsformen des Rauheitsmesstasters, die ein virtuelle Gleitkufe umfassen, ist eine Regelung (Steuerung) vorgesehen, die bei einem Bewegen des Rauheitsmesstasters relativ zu der Oberfläche eine äquidistante Position hält.

Bei mindestens einem Teil der Ausführungsformen umfasst der Rauheitsmesstaster eine optische Abtastvorrichtung, die als chromatische konfokale Sensorvorrichtung ausgelegt ist, die eine Lichtquelle zum Aussenden von weissem Licht, eine Linsenanordnung zum unterschiedlichen Fokussieren verschiedener Wellenlängenbereiche des weissen Lichts, und ein Spektrometer zum Auswerten von Licht mindestens einer Wellenlänge umfasst, das von der Oberfläche reflektiert wurde. Ein solcher Rauheitsmesstaster ist besonders kompakt.

Bei mindestens einem Teil der Ausführungsformen umfasst der Rauheitsmesstaster eine optische Abtastvorrichtung, die nach dem Triangulationsprinzip ausgelegt ist und die eine (Laser-)Lichtquelle zum Aussenden eines Lichtstrahls und einen beabstandet angeordneten Detektor zum Empfangen eines Lichtstrahls umfasst, der von der Oberfläche reflektiert wurde.

Bei mindestens einem Teil der Ausführungsformen umfasst der Rauheitsmesstaster eine optische Abtastvorrichtung, die dazu ausgelegt ist einen Lichtstrahl in eine Richtung auszusenden, die senkrecht oder schräg zu einer Längsachse des Rauheitsmesstasters verläuft. Eine solche Ausführungsform ist kompatibel mit den eingangs genannten Rauheitsmesstastern, die flach oder leicht schräg über die Oberfläche gezogen oder geschoben werden.

Bei mindestens einem Teil der Ausführungsformen umfasst der Rauheitsmesstaster eine optische Abtastvorrichtung, die dazu ausgelegt ist einen Lichtstrahl in eine Richtung auszusenden, die parallel zu einer Längsachse des Rauheitsmesstasters verläuft. Eine solche Ausführungsform hat den Vorteil, dass sie wie ein Stift über die Oberfläche geführt werden kann.

Ein Koordinatenmesssystem der Erfindung umfasst bei mindestens einem Teil der Ausführungsformen einen Rauheitsmesstaster der Erfindung. Ausserdem umfasst das Koordinatenmesssystem mindestens eine NC-gesteuerte Achse zum Bewegen des Rauheitsmesstasters relativ zu der Oberfläche eines Bauteils.

Bei mindestens einem Teil der Ausführungsformen wird ein Rauheitsmesstaster der Erfindung zum Messen der Oberflächenrauheit der Zahnflanken von Zahnrädern verwendet, wobei ein Lichtstrahl der optische Abtastvorrichtung in Richtung einer der Zahnflanken gesendet und dort zurück in Richtung der optischen Abtastvorrichtung reflektiert wird.

Weitere vorteilhafte Ausgestaltungen des erfindungsgemäßen Rauheitsmesstasters, der Vorrichtung und der Verwendung sind den abhängigen Ansprüchen zu entnehmen.

Die Erfindung lässt sich im Zusammenhang mit 1D-, 2D- und 3D-Messvorrichtungen verwenden.

### ZEICHNUNGEN

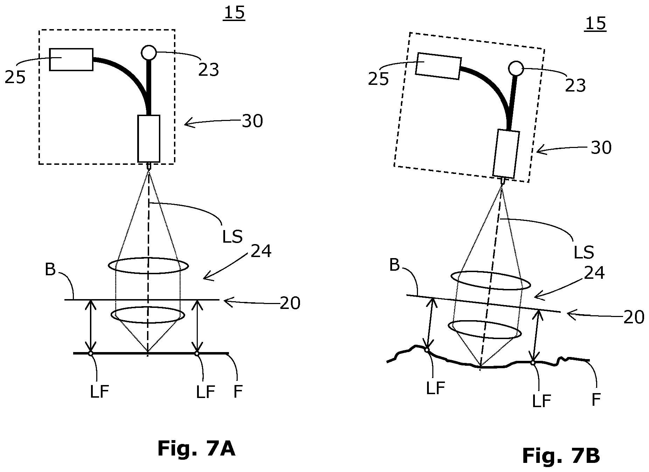

Abbildungen 7A, 7B, 8-10 zeigen Ausführungsbeispiele der Erfindung. Abbildungen 1 bis 6 zeigen weitere Beispiele, die nicht unter den Schutzbereich der Erfindung fallen, auch wenn sie in den zugehörigen Passagen der Beschreibung als "Ausführungsbeispiele" bezeichnet werden. Der Schutzbereich der Erfindung wird durch die Ansprüche definiert.
- **FIG. 1**: zeigt eine schematische Ansicht eines vorbekannten Gleitkufenmessgeräts;
- **FIG. 2A**: zeigt eine schematische Ansicht eines vorbekannten verbesserten Gleitkufenmessgeräts;
- **FIG. 2B**: zeigt eine schematische Ansicht eines weiteren Gleitkufenmessgeräts, das auf dem Ansatz der Fig. 2A basiert;
- **FIG. 2C**: zeigt eine schematische Ansicht eines vorbekannten Rauheitsmesstasters mit seitlicher Kufe;
- **FIG. 2D**: zeigt eine perspektive Ansicht des vorderen Teils des Rauheitsmesstasters der Fig. 2C;
- **FIG. 3**: zeigt eine schematische Perspektivansicht des vorderen Bereichs des Rauheitsmesstasters einer ersten Ausführungsform von schräg unten;
- **FIG. 4**: zeigt eine schematische, vergrößerte Schnittansicht des vorderen Bereichs des Rauheitsmesstasters, wobei dieser Rauheitsmesstaster eine chromatische konfokale Sensorvorrichtung umfasst;
- **FIG. 5**: zeigt eine schematische Darstellung des Funktionsprinzip eines weiteren Rauheitsmesstasters, der nach dem Triangulationsprinzip arbeitet;
- **FIG. 6**: zeigt eine schematische Schnittansicht des vorderen Teils eines weiteren Rauheitsmesstasters, der nach dem Triangulationsprinzip arbeitet;
- **FIG. 7A**: zeigt eine schematische Darstellung des Funktionsprinzip eines weiteren Rauheitsmesstasters, der eine chromatische konfokale Sensorvorrichtung und eine virtuelle Gleitkufe umfasst;
- **FIG. 7B**: zeigt eine schematische Darstellung des Rauheitsmesstasters der Fig. 7A in einer anderen Stellung;
- **FIG. 8**: zeigt eine schematische Ansicht des vorderen Teils eines weiteren Rauheitsmesstasters, der einen Tastarm umfasst, in dessen Endbereich eine virtuelle Gleitkufe und eine optische Abtastvorrichtung integriert sind;
- **FIG. 9**: zeigt eine schematische Ansicht des vorderen Teils eines weiteren Rauheitsmesstasters, der einen Tastarm umfasst, in dessen Endbereich eine virtuelle Gleitkufe und eine optische Abtastvorrichtung integriert sind;
- **FIG. 10**: zeigt eine perspektivische Ansicht einer Vorrichtung (hier in Form eines Koordinatenmesssystems), die mit einem Rauheitsmesstaster der Erfindung ausgestattet ist.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Der Begriff Rauheit wird hier verwendet, um die Oberflächenqualität einer Oberfläche F zu bezeichnen. Die Rauheit beschränkt sich eher auf mikroskopische, im Sinne von punktuellen oder lokalen Aussagen. Typischerweise geht es im Zusammenhang mit der Rauheit hier um Strukturen, Elemente und Merkmale einer Oberfläche F, die eine Grösse im Bereich von nm bis ca. 500 µm haben. Insbesondere geht es hier um das Messen der Oberfläche der Zahnflanken von Zahnrädern 11 und von ähnlichen Bauteilen.

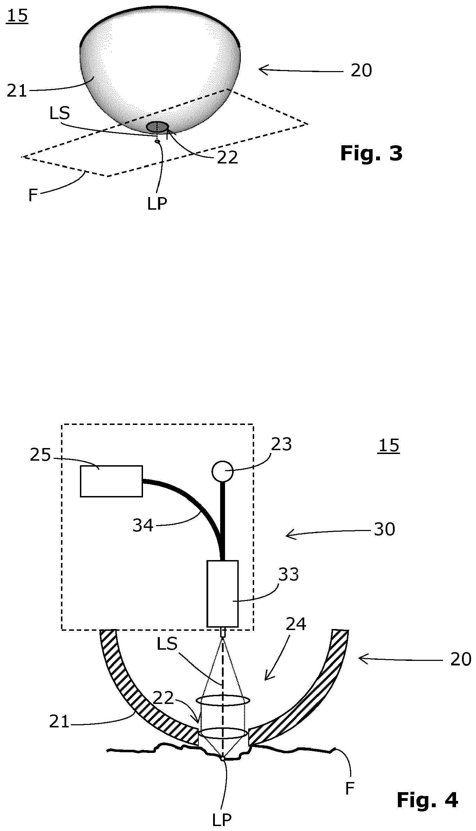

In Fig. 3 sind Details einer ersten Ausführungsform eines Rauheitsmesstasters 15 gezeigt, der speziell zum Abtasten einer Oberfläche F ausgelegt ist. Der Rauheitsmesstaster 15 umfasst eine integrierend wirkende Vorrichtung 20 und eine optische Abtastvorrichtung 30. Die optische Abtastvorrichtung 30 ist jedoch in Fig. 3 nicht zu sehen, da sie im Inneren der integrierend wirkenden Vorrichtung 20 sitzt. Die abzutastende Oberfläche F ist hier als transparente Ebene von schräg unten gezeigt.

Im Zusammenhang mit dem vorliegenden Dokument, ist die integrierend wirkende Vorrichtung 20 eine Vorrichtung, die dazu ausgelegt ist beim Abtasten der Oberfläche F einen mittleren Abstand zwischen dem Rauheitsmesstaster 15 und einem größeren Bereich der Oberfläche F vorzugeben. In Fig. 4 ist anhand einer vergrößerten, schematischen Darstellung zu erkennen, dass die Oberfläche F eine Rauheit mit makroskopischen und mikroskopischen Details oder Artefakten umfasst. Anhand der Figuren 7A und 7B wird erläutert werden, wie die integrierend wirkende Vorrichtung 20 eine äquidistante Position vorgeben kann.

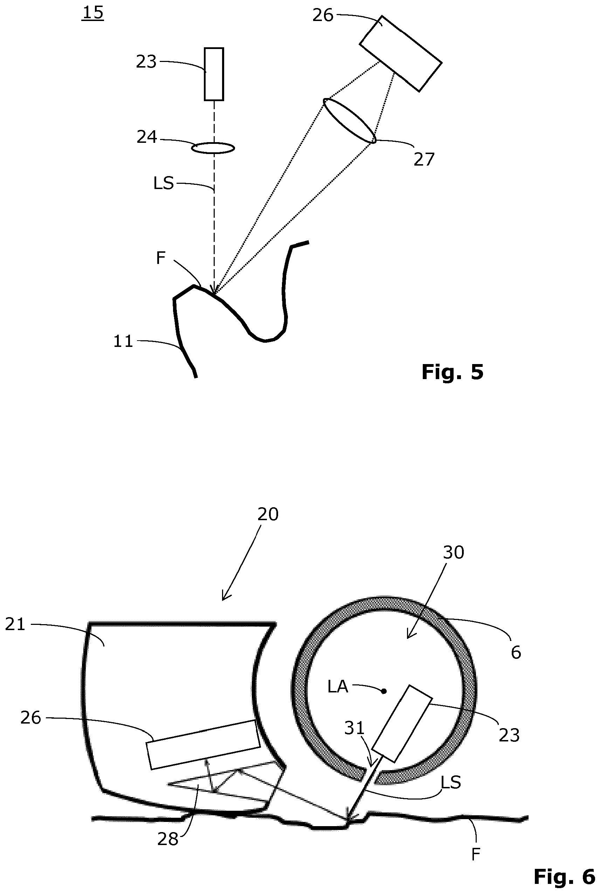

Eine integrierend wirkende Vorrichtung 20, wenn sie als mechanische wirkende Gleitkufe 21 ausgelegt ist, wie in den Figuren 3 und 4 anhand eines halbkugelförmigen Gleitelements und in Fig. 6 anhand eines Gleitelements 21 mit gekrümmter Gleitfläche gezeigt, liegt aufgrund ihrer 3-dimensionalen Ausdehnung auf den makroskopischen Details oder Artefakten der Oberfläche F auf (siehe Fig. 4 und Fig. 6).

Mindestens ein Teil der Ausführungsformen umfasst eine mechanische wirkende Gleitkufe 21, um eine integrierende Wirkung in Bezug auf den relativen Abstand zwischen dem Rauheitsmesstaster 15 und der Oberfläche F zu erzeugen. Die Funktion einer Gleitkufe 21 ist im Prinzip aus den eingangs genannten Publikationen bekannt und wird hier nicht im Detail erläutert. Einem Fachmann ist die Funktion und die Auswertung eines Signals, falls der Gleitkufe 21 ein Signalgeber zugeordnet ist, bekannt.

Mindestens ein Teil der Ausführungsformen umfasst eine virtuelle Gleitkufe 21, wie später anhand von Ausführungsbeispielen beschrieben wird.

Die integrierend wirkende Vorrichtung 20 ist bei allen Ausführungsformen so ausgelegt, dass sie einen mittleren Abstand zwischen dem Rauheitsmesstaster 15 und einem größeren Bereich der Oberfläche F vorgibt. Dieser mittlere Abstand ergibt sich quasi aus den makroskopischen Details oder Artefakten der Oberfläche F. Statt von einem mittleren Abstand ist hier auch die Rede von einer äquidistanten Position.

Jede der Ausführungsformen umfasst eine optische Abtastvorrichtung 30, die unmittelbar an oder in der integrierend wirkenden Vorrichtung 20 angeordnet ist. In den Figuren 3 und 4 sind Ausführungsformen gezeigt, bei denen die optische Abtastvorrichtung 30 (mindestens teilweise) in der Vorrichtung 20 angeordnet sind. In Fig. 6 ist eine Ausführungsform gezeigt, bei der ein Teil (hier ein Detektor 26) der optischen Abtastvorrichtung 30 in der Gleitkufe 21 angeordnet ist.

Die optische Abtastvorrichtung 30 ist speziell dazu ausgelegt einen kleineren Bereich der Oberfläche F berührlos optisch abzutasten. Wenn in diesem Zusammenhang von "größeren Bereichen" und "kleineren Bereichen" die Rede ist, dann handelt es sich in erster Linie um relative Angaben. Der kleinere Bereich ist kleiner als der größere Bereich. Das berührungslose, optische Abtasten des kleineren Bereichs mit der optische Abtastvorrichtung 30 ermöglicht punktuelle oder lokale Aussagen relativ zur momentanen Position der integrierend wirkenden Vorrichtung 20.

Das berührungslose, optische Abtasten des kleineren Bereichs mit der optische Abtastvorrichtung 30 ermöglicht das Erfassen von Details oder Artefakten mit einer Grösse im Bereich von nm bis ca. 500 µm.

Die integrierend wirkende Vorrichtung 20 hingegen arbeitet im Bereich von µm und grösser.

Bei mindestens einem Teil der Ausführungsformen umfasst Rauheitsmesstaster 15 eine Gleitkufe 21 als Teil der integrierend wirkenden Vorrichtung 20. Vorzugsweise weist diese Gleitkufe 21 eine gekrümmte Gleitfläche auf, wie in den Figuren 3 und 4 anhand eine kugelförmigen Gleitfläche und in Fig. 6 anhand einer 3-dimensional gekrümmten Gleitfläche gezeigt.

Bei mindestens einem Teil der Ausführungsformen hat die Gleitkufe 21 einen gekrümmten Querverlauf in einer Querschnittebene betrachtet. Eine solche Lösung zeigt eine effektive Integrationswirkung und ein gutes Gleitverhalten.

Bei mindestens einem Teil der Ausführungsformen hat die Gleitkufe 21 einen gekrümmten Längsverlauf in einer Längsschnittebene betrachtet. Eine solche Lösung zeigt eine effektive Integrationswirkung und ein gutes Gleitverhalten.

Bei mindestens einem Teil der Ausführungsformen umfasst die Gleitkufe 21 eine Apertur 22, wie anhand der Figuren 3 und 4 gezeigt. In diesem Fall ist die optische Abtastvorrichtung 30 so in Bezug zu der Gleitkufe 21 angeordnet, dass sie in der Lage ist einen Lichtstrahl LS durch die Gleitkufe 21 und die Apertur 22 hindurch in Richtung der Oberfläche F auszusenden.

In Fig. 3 ist lediglich ein mittlerer Lichtstrahl LS dargestellt, der auf der Oberfläche F eine Lichtpunkt LP bildet. Der reflektierte Lichtstrahl ist nicht separat gezeigt.

In Fig. 4 ist das Grundprinzip einer chromatischen konfokalen Sensorvorrichtung gezeigt, die eine Lichtquelle 23 zum Aussenden von weissem Licht umfasst. Weiterhin umfasst die Sensorvorrichtung eine Linsenanordnung 24 (z.B. mit einer Kollimator-Linse und einer zweiten Linse, die die unterschiedlichen Wellenlängen des weissen Lichts in unterschiedliche Fokuspunkte fokussiert). Die Sensorvorrichtung umfasst auch ein Spektrometer 25 zum Auswerten von Licht mindestens einer Wellenlänge, das von der Oberfläche F reflektiert wurde.

Eine solche chromatisch konfokale Sensorvorrichtung sendet das weisse Licht in Richtung der Kollimator-Linse aus. Dort werden die Lichtstrahlen in parallele Strahlen umgewandelt. Die zweite Linse bewirkt ein räumliches Trennen der unterschiedlichen Wellenlängen des weissen Lichts, wobei jeder Wellenlängenbereich einen eigenen Fokuspunkt FP hat. Die Fokuslänge des blauen Lichtanteils ist dabei kürzer als die Fokuslänge des grünen Lichtanteils, die wiederum kürzer ist als die Fokuslänge des roten Lichtanteils.

Im Prinzip wird an der Oberfläche F überwiegend die Wellenlänge reflektiert, deren Fokuslänge mit dem Abstand zwischen dem untersten Punkt der Gleitkufe 21 und einem lokalen Punkt der Oberfläche F übereinstimmt. Bei einem besonders geringen relativen Abstand ΔA wird z.B. überwiegend der blaue Lichtanteil reflektiert.

Der reflektierte Lichtanteil wird durch die Linsenanordnung 24 zurück in Richtung eines Kopplers 33 gesendet. Dort wird der reflektierte Lichtanteil über eine Glasfaser 34 zu einem Spektrometer 25 geführt. Das Spektrometer 25 ist dazu ausgelegt zu ermitteln, in welchem Wellenlängenbereich die grösste Lichtintensität zurück reflektiert wurde. Anhand des Maximums der Lichtintensität kann der relative Abstand ΔA ermittelt werden. ΔA bezeichnet den relativen Abstand zwischen eine Bezugslinie oder Bezugsebene B des Rauheitsmesstasters 15. Bei einer mechanischen Gleitkufe 21 wird die Bezugslinie oder Bezugsebene B durch die momentane Position der Gleitkufe 21 relativ zur Oberfläche F bestimmt. Bei einer virtuellen Gleitkufe 21 wird die Bezugslinie oder Bezugsebene B durch eine Steuerung relativ zur Oberfläche F in einer äquidistanten Position gehalten.

Die Wellenlänge des momentan im Fokus befindlichen Lichtanteils codiert bei einer chromatisch konfokalen Sensorvorrichtung quasi den relativen Abstand ΔA.

Eine solche optische Abtastvorrichtung 30, die auf dem chromatisch konfokalen Prinzip beruht, kann eine Auflösung im Bereich zwischen 0,01 bis 0,1 µm erzielen. Eine optische Abtastvorrichtung 30, die auf dem chromatisch konfokalen Prinzip beruht, kann relative Abstände ΔA zwischen 0,01 bis 1 µm messen. In diesem Bereich der Auflösung können Genauigkeiten zwischen 0,03 bis 1 µm erzielt werden.

Beim Messen nach dem chromatisch konfokalen Prinzip ist es wichtig, dass der Lichtstrahl LS nicht zu flach auf die zu messende Oberfläche F auftrifft. Bei der in Fig. 4 gezeigten Konstellation trifft der Lichtstrahl LS mit einem sehr steilen Winkel auf (wenn die Oberfläche F exakt eben ist und senkrecht zum Lichtstrahl LS steht).

Bei mindestens einem Teil der Ausführungsformen, die auf dem chromatisch konfokalen Prinzip beruhen, wird die integrierend wirkende Vorrichtung 20 so über die Oberfläche F geführt (gezogen oder geschoben) oder so zur Oberfläche F positioniert, dass der Winkel zwischen der Oberfläche F und dem Lichtstrahl LS mindestens 30 Grad beträgt.

Bei mindestens einem Teil der Ausführungsformen kommt eine optische Abtastvorrichtung 30 zum Einsatz, die auf dem Triangulationsprinzip beruht. In Fig. 5 ist das Beispiel einer Ausführungsform in schematischer Form gezeigt, wobei in dieser Darstellung die integrierend wirkende Vorrichtung 20 nicht gezeigt ist.

Eine optische Abtastvorrichtung 30, die auf dem Triangulationsprinzip beruht, umfasst eine Lichtquelle 23 (vorzugsweise eine Laserquelle) und eine Linsenanordnung 24 (hier durch eine einzige Linse realisiert), die einen Lichtstrahl LS auf die Oberfläche F bündelt. In Fig. 5 ist ein Abschnitt eines Zahnrads oder Bauteils 11 gezeigt, dessen eine Flanke als Oberfläche F bezeichnet ist. Ein Teil des Lichtstrahls LS wird an der Oberfläche F in Richtung eines Detektors 26 reflektiert. Auch hier kann eine Linse oder eine Linsenanordnung 27 zum Einsatz kommen, um die reflektierten Lichtstrahlen (deren Verlauf hier gepunktet dargestellt ist) in Richtung des Detektors 26 zu bündeln. Aus der Position der Lichtstrahlen, die auf dem Detektor 26 eintreffen und aus der bekannten Position des Detektors 26 relativ zur Lichtquelle 23, kann der relative Abstand ΔA ermittelt werden.

Fig. 6 zeigt einen Rauheitsmesstaster 15, der eine seitliche Gleitkufe 21 als Teil der integrierend wirkenden Vorrichtung 20 umfasst. Weiterhin umfasst dieser Rauheitsmesstaster 15 eine optische Abtastvorrichtung 30, die auf dem Triangulationsprinzip beruht. Die Lichtquelle 23 der optische Abtastvorrichtung 30 ist hier durch einen rechteckigen Block im Inneren eines hohlen Abtastarms 6 gezeigt. Vorzugsweise ist die Lichtquelle 23 in Längsrichtung (definiert durch eine Längsachse LA) des hohlen Abtastarms 6 angeordnet und ein Spiegel oder Prisma kann zur Ablenkung des Lichtstrahls LS dienen, so dass dieser durch eine Apertur 31 den Abtastarm 6 verlässt und auf die Oberfläche F auftrifft. Bei der in Fig. 6 gezeigten Abtastvorrichtung 30 sitzt die Lichtquelle 23 schräg im Inneren des hohlen Abtastarms 6. Die Lichtquelle 23 richtet den Lichtstrahl LS auf die Oberfläche F. An der Oberfläche F wird der Lichtstrahl LS reflektiert und in Richtung eines Detektors 26 umgelenkt, der hier in eine seitlich angeordnete Gleitkufe 21 integriert ist.

Die Gleitkufe 21 umfasst ein prismatisches optisches Element 28, dessen Form und Reflektionsverhalten so ausgelegt ist, dass durch mehrfache interne Reflektionen der Lichtstrahl in Richtung des Detektors 26 reflektiert wird.

Bei der in Fig. 6 gezeigten Darstellung verläuft die Längsachse des Rauheitsmesstasters 15 (die hier durch die Längsachse LA des hohlen Abtastarms 6 definiert wird) senkrecht zur Zeichenebene. Der Rauheitsmesstaster 15 wird zum Abtasten der Oberfläche F in die Zeichenebene hinein (ziehende Bewegung) oder aus der Zeichenebene hinaus (schiebende Bewegung) bewegt.

Die in Fig. 6 gezeigte Ausführungsform kann beispielsweise in einen Rauheitsmesstaster 15 der Fig. 2D integriert werden, wobei in diesem Fall statt der Tastspitze eine Apertur 31 für den austretenden Lichtstrahl LS vorgesehen ist.

Der Rauheitsmesstaster 15 kann ein integrierend wirkende Vorrichtung 20 umfassen, die eine optische Anordnung umfasst. Diese optische Anordnung wird hier als virtuelle Gleitkufe bezeichnet. Diese optische Anordnung ist so ausgebildet, dass sie mindestens einen Lichtfleck LF auf der Oberfläche F abbildet.

Bei mindestens einem Teil der Ausführungsformen ist der Lichtfleck LF deutlich größer als der Lichtpunkt LP, der von der optischen Abtastvorrichtung 30 erzeugt wird.

Bei mindestens einem Teil der Ausführungsformen werden der Lichtfleck LF und der Lichtpunkt LP auf den selben Bereich der Oberfläche F erzeugt, wobei der Lichtpunkt LP innerhalb des Lichtfleck LF sitzt und eine kleiner Fläche abdeckt als der Lichtfleck LF. Um die beiden Lichtstrahlen optisch trenne zu können, falls der Lichtpunkt LP innerhalb des Lichtfleck LF sitzt, können z.B. unterschiedliche Wellenlängen eingesetzt werden, die sich sauber trennen lassen.

Bei mindestens einem Teil der Ausführungsformen werden zwei oder drei Lichtflecken LF erzeugt, wie in Fig. 7A gezeigt. In diesem Fall liegt der Lichtpunkt LP, der von der optischen Abtastvorrichtung 30 erzeugt wird, zwischen den beiden oder zwischen den drei Lichtflecken LF.

Bei mindestens einem Teil der Ausführungsformen, die mit zwei oder drei Lichtflecken LF arbeiten, wird die Position des Rauheitsmesstasters 15 so relativ zur Oberfläche F eingestellt (durch das Bewegen mindestens einer NC-gesteuerten Achse), dass die Lichtflecken LF einen äquidistanten Abstand zu einer Bezugslinie oder Bezugsebene B haben. In Fig. 7A ist eine Oberfläche F gezeigt, die keine Artefakte oder Objekte im makroskopischen Bereich aufweist. Durch das Bewegen der mindestens einen NC-gesteuerten Achse wurde der Rauheitsmesstaster 15 so positioniert, dass die Bezugslinie oder Bezugsebene B parallel zur Oberfläche F verläuft. Sobald diese Position erreicht wurde (hier als äquidistante Position bezeichnet), kann die optische Abtastvorrichtung 30 eingesetzt werden, um einen kleineren Bereich der Oberfläche F abzutasten.

Bei dem Ausführungsbeispiel der Fig. 6 kommt eine chromatisch konfokale Sensorvorrichtung als optische Abtastvorrichtung 30 zum Einsatz, die eine Lichtquelle 23 zum Aussenden von weissem Licht, eine Linsenanordnung 24 zum unterschiedlichen Fokussieren verschiedener Wellenlängenbereiche des weissen Lichts, und ein Spektrometer 25 umfasst, das zum Auswerten von Licht mindestens einer Wellenlänge ausgelegt ist, das von der Oberfläche F reflektiert wurde.

In Fig. 7B ist eine andere Momentaufnahme gezeigt. Der Rauheitsmesstaster 15 der Fig. 7A befindet sich nun oberhalb einer Oberfläche F, die deutlich erkennbare Artefakte oder Objekte im makroskopischen Bereich aufweist. Auch hier wird durch die Steuerung eine äquidistante Position eingestellt, indem die mindestens eine NC-gesteuerte Achse entsprechend bewegt wurde. Anhand der Fig. 7B ist die integrierende Funktion der integrierend wirkenden Vorrichtung 20 gut zu erkennen. Die integrierend wirkende Vorrichtung 20 sucht den mittleren Abstand zwischen makroskopischen Artefakten oder Objekten einzustellen. Im gezeigten Beispiel wurde die Bezugslinie oder Bezugsebene B leicht schräg geneigt, damit an beiden Lichtflecken LF der selbe Abstand gilt. Sobald diese Position erreicht wurde (hier als äquidistante Position bezeichnet), kann die optische Abtastvorrichtung 30 eingesetzt werden, um wiederum einen kleineren Bereich der Oberfläche F abzutasten.

Die virtuelle Gleitkufe ersetzt im Prinzip die mittelnde oder integrierende Funktion der mechanischen Gleitkufe 21 der zuvor beschriebenen Ausführungsformen, wobei bei der virtuellen Gleitkufe eine Steuerung um Zusammenwirken mit mindestens einer NC-gesteuerten Achse einen Teil der Funktion übernimmt.

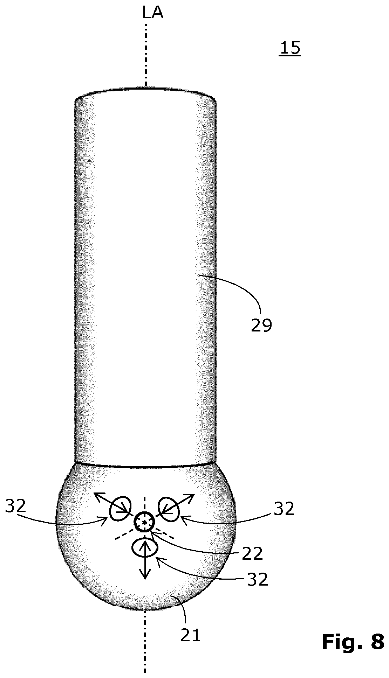

Bei mindestens einem Teil der Ausführungsformen werden drei Lichtflecken LF erzeugt. In Fig. 8 ist eine Ansicht des vorderen Teils einer entsprechenden Ausführungsform gezeigt. Der Rauheitsmesstaster 15 der Fig. 8 umfasst einen Tastarm 29 (der z.B innen hohl sein kann, wie der Arm 6 in Fig. 6). An dessen extremalem Ende ist hier eine Kugel 21 vorgesehen. Diese Kugel 21 hat am untersten Punkt (Fig. 8 zeigt die Kugel von unten) eine Apertur 22, die zum Aussenden und Empfangen des Lichtstrahls LS der optische Abtastvorrichtung 30 dient. In einem gegenseitigen Winkelabstand von 120 Grad sind drei weitere Aperturen 32 konzentrisch zu der Apertur 22 angeordnet. Diese drei Aperturen 32 dienen zum Erzeugen von je einem Lichtfleck LF, wie im Zusammenhang mit den Figuren 7A und 7B beschrieben. Die drei Lichtflecken LF erlauben das äquidistante Positionieren einer Bezugsebene B relativ zur Oberfläche F.

Die Kugel 21 kann bei Bedarf als mechanische Gleitkufe 21 dienen, wie zuvor beschrieben. Die Kugel 21 kann aber auch durch den Einsatz einer Steuerung und mindestens eine NC-gesteuerten Achse, sowie durch das Aussenden und Auswerten dreier Lichtflecken LF in einer äquidistanten Position oberhalb der Oberfläche F gehalten werden.

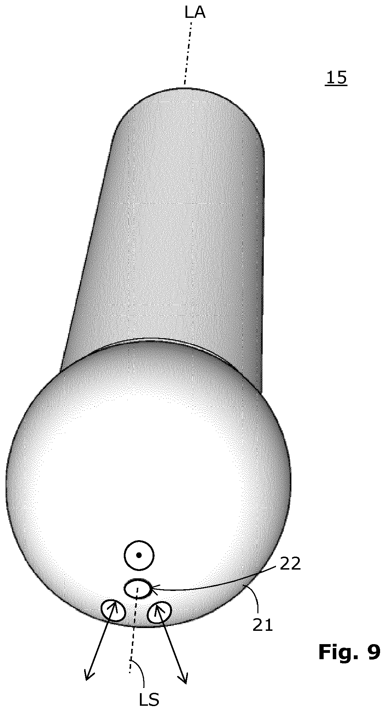

Bei mindestens einem Teil der Ausführungsformen werden drei Lichtflecken LF erzeugt. In Fig. 9 ist eine Ansicht des vorderen Teils einer weiteren entsprechenden Ausführungsform gezeigt. Der Rauheitsmesstaster 15 der Fig. 9 umfasst einen Tastarm 29 (der z.B innen hohl sein kann, wie der Arm 6 in Fig. 6). An dessen extremalem Ende ist hier eine Kugel 21 vorgesehen. Diese Kugel 21 hat am vordersten Punkt (Fig. 9 zeigt die Kugel schräg von oben) eine Apertur 22, die zum Aussenden und Empfangen des Lichtstrahls LS der optische Abtastvorrichtung 30 dient. Der Lichtstrahl LS verläuft hier vorzugsweise parallel zur Längsachse LA.

In einem gegenseitigen Winkelabstand von 120 Grad sind drei weitere Aperturen 32 konzentrisch zu der Apertur 22 angeordnet. Diese drei Aperturen 32 dienen zum Erzeugen von je einem Lichtfleck LF, wie im Zusammenhang mit den Figuren 7A und 7B beschrieben. Die drei Lichtflecken LF erlauben das äquidistante Positionieren einer Bezugsebene B relativ zur Oberfläche F. Auch in diesem Fall liegt der Lichtpunkt LP, der von der optischen Abtastvorrichtung 30 erzeugt wird, zwischen den drei Lichtflecken LF.

Der Rauheitsmesstaster 15 der Fig. 9 wird eher wie in Stift über die Oberfläche F geführt. Der Rauheitsmesstaster 15 der Fig. 8 hingegen wird eher flach oder leicht schräg über die Oberfläche F gezogen oder geschoben.

Bei mindestens einem Teil der Ausführungsformen ist der Rauheitsmesstaster 15 an einem vollautomatischen, CNC-gesteuerten Messgerät 10, angeordnet. Das Messgerät 10 (hier auch als Koordinatenmesssystem 10 bezeichnet) ist zum Beispiel geeignet zum Prüfen der Oberflächenrauheit, Form oder Geometrie von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Bauteilen 11, zur Kurven- und Nockenwellenmessung oder auch zur Rotormessung, um nur einige Einsatzmöglichkeiten aufzuzählen.

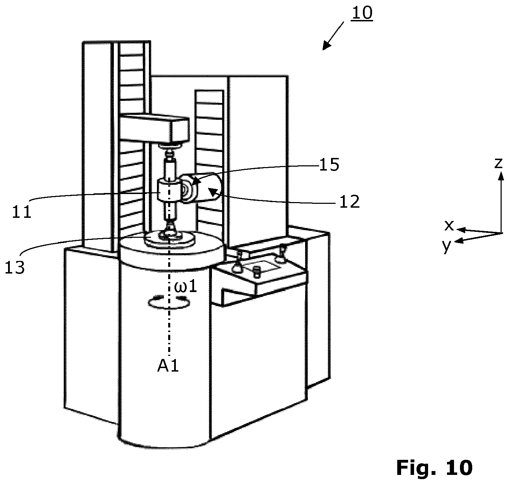

Das Koordinatenmesssystem 10 umfasst einen über eine Ansteuerung (nicht sichtbar) antreibbaren Mitnehmer 13 zum Aufnehmen/Halten des zu vermessenden Bauteils 11, wie in Fig. 10 anhand eines stilisierten Zylinderrades 11 gezeigt.

Das Koordinatenmesssystem 10 umfasst, wie in Fig. 10 gezeigt, mindestens einen Rauheitsmesstaster 15 zum eindimensionalen, zweidimensionalen oder dreidimensionalen Vermessen des in dem Koordinatenmesssystem 10 eingespannten Bauteiles 11. Vorzugsweise ist ein Tastsystem 12 mit (Feder-) Parallelogrammaufbau vorgesehen, das in der Höhe (parallel zur z-Achse) verschoben werden kann. Ausserdem kann der Rauheitsmesstaster 15 weitere Zustellbewegungen ausführen (vorzugsweise kommt hier eine Steuerung, vorzugsweise eine 4-Achsen Bahnsteuerung, des Koordinatenmesssystems 10 zum Einsatz). Bei Bedarf kann eine Drehbewegung ω1 um die A1-Achse des Koordinatenmesssystems 10 ausgeführt werden.

Bei dem Verwenden des Rauheitsmesstasters 15 kann die Gleitkufe 21 - bei Ausführungsformen mit Gleitkufe 21 - mit dem Parallelogrammaufbau des Tastsystems 12 verbunden sein, um Signale zu erzeugen, die eine Aussage über die makroskopischen Details der Oberfläche F ermöglichen. Zur gleichen Zeit kann die optische Abtastvorrichtung 30 Signale erzeugen, die eine Aussage über die mikroskopischen Details der Oberfläche F ermöglichen.

Bei dem Verwenden des Rauheitsmesstasters 15 mit virtueller Gleitkufe können eine oder mehrere der NC-gesteuerten Achsen des Koordinatenmesssystems 10 eingesetzt werden, um jeweils eine äquidistante Position vorzugeben. Sobald eine äquidistante Position erreicht wurde, kann die optische Abtastvorrichtung 30 Signale erzeugen, die eine Aussage über die mikroskopischen Details der Oberfläche F ermöglichen.

Weitere Details zur genauen Funktionsweise des Koordinatenmesssystems 10 können der publizierten Patentanmeldung EP2199732A1 entnommen werden.

**Bezugszeichen:**

| | |
|---|---|
| Gleitkufentaster | 1 |
| Gleitkufe | 2 |
| Taster | 3 |
| Tastspitze | 4 |
| Gleitkufe/Gleitelement | 5 |
| Tastarm | 6 |
| | |
| Messgerät / (Mess-)Vorrichtung / Koordinatenmesssystem | 10 |
| Bauteil / Zahnrad | 11 |
| Tastsystem | 12 |
| Mitnehmer / Drehteller | 13 |
| (Rauheits)Messtaster | 15 |
| | |
| integrierend wirkende Vorrichtung | 20 |
| Gleitkufe / Gleitelement / Kugel | 21 |
| Apertur | 22 |
| Lichtquelle | 23 |
| Linsenanordnung | 24 |
| Spektrometer | 25 |
| Detektor | 26 |
| Spiegel | 27 |
| prismatisches optisches Element | 28 |
| Stab / Tastarm | 29 |
| optische Abtastvorrichtung | 30 |
| Apertur | 31 |
| Aperturen | 32 |
| Koppler | 33 |
| Glasfaser | 34 |
| | |
| Abstand | A |
| Bezugslinie / Bezugsebene | B |
| Rotationsachse | A1 |
| relativer Abstand | ΔA |
| Oberfläche | F |
| Längsachse | LA |
| Lichtfleck | LF |
| Lichtpunkt | LP |
| Lichtstrahl | LS |
| Ebene | SE |
| Koordinaten | x, y, Z |
| Drehbewegung | ω1 |

## Patentansprüche

1. Rauheitsmesstaster (15) zum Abtasten einer Oberfläche (F) umfassend eine integrierend wirkende Vorrichtung (20) und eine optische Abtastvorrichtung (30), wobei die optische Abtastvorrichtung (30) unmittelbar an oder in der integrierend wirkenden Vorrichtung (20) angeordnet ist, wobei die integrierend wirkende Vorrichtung (20) dazu ausgelegt ist beim Abtasten der Oberfläche (F) einen mittleren Abstand zwischen dem Rauheitsmesstaster (15) und einem größeren Bereich der Oberfläche (F) vorzugeben und wobei die optische Abtastvorrichtung (30) dazu ausgelegt ist, einen kleineren Bereich der Oberfläche (F) berührungslos optisch abzutasten, wobei die integrierend wirkende Vorrichtung (20) eine optische Anordnung umfasst, die als virtuelle Gleitkufe so ausgebildet ist, dass diese mindestens einen Lichtfleck (LF) auf der Oberfläche (F) abbildet.

2. Rauheitsmesstaster (15) nach Anspruch 1, **dadurch gekennzeichnet, dass** die optische Anordnung dazu ausgelegt ist mindestens zwei Lichtflecken (LF) so auf der Oberfläche (F) abzubilden, dass eine Bezugslinie oder Bezugsebene (B) des Rauheitsmesstaster (15) äquidistant positionierbar ist.

3. Rauheitsmesstaster (15) nach Anspruch 2, **dadurch gekennzeichnet, dass** die optische Abtastvorrichtung (30) dazu ausgelegt ist nach dem äquidistanten Positionieren den kleineren Bereich der Oberfläche (F) berührungslos optisch abzutasten.

4. Rauheitsmesstaster (15) nach Anspruch 2 oder 3, **dadurch gekennzeichnet, dass** dieser eine Regelung umfasst, die bei einem Bewegen des Rauheitsmesstasters (15) relativ zu der Oberfläche (F) diesen in einer äquidistanten Position hält.

5. Rauheitsmesstaster (15) nach einem der Ansprüche 1 bis 4, **dadurch gekennzeichnet, dass** die optische Abtastvorrichtung (30) als chromatische konfokale Sensorvorrichtung ausgelegt ist, die eine Lichtquelle (23) zum Aussenden von weißem Licht, eine Linsenanordnung (24) zum unterschiedlichen Fokussieren verschiedener Wellenlängenbereiche des weißen Lichts, und ein Spektrometer (25) zum Auswerten von Licht mindestens einer Wellenlänge, das von der Oberfläche (F) reflektiert wurde.

6. Rauheitsmesstaster (15) nach einem der Ansprüche 1 bis 4, **dadurch gekennzeichnet, dass** die optische Abtastvorrichtung (30) nach dem Triangulationsprinzip ausgelegt ist und eine (Laser-)Lichtquelle (23) zum Aussenden eines Lichtstrahls (LS) und einen beabstandet angeordneten Detektor (26) zum Empfangen eines Lichtstrahls (LS), der von der Oberfläche (F) reflektiert wurde.

7. Rauheitsmesstaster (15) nach Anspruch 6, **dadurch gekennzeichnet, dass** die optische Abtastvorrichtung (30) eine Linse (24) und/oder einen Spiegel (27) und/oder ein prismatisches optisches Element (28) umfasst.

8. Rauheitsmesstaster (15) nach einem der Ansprüche 1 bis 7, **dadurch gekennzeichnet, dass** die Gleitkufe (21) im Bereich des extremalen Endes eines Tastarms (29) angeordnet ist, der eine Längsausdehung parallel zu einer Längsachse (LA) aufweist.

9. Rauheitsmesstaster (15) nach Anspruch 8, **dadurch gekennzeichnet, dass** die optische Abtastvorrichtung (30) dazu ausgelegt ist einen Lichtstrahl (LS) in eine Richtung auszusenden, die senkrecht oder schräg oder parallel zu der Längsachse (LA) verläuft.

10. Koordinatenmesssystem (10) mit einem Rauheitsmesstaster (15) gemäß einem der Ansprüche 1 - 9, wobei das Koordinatenmesssystem (10) mindestens eine NC-gesteuerte Achse zum Bewegen des Rauheitsmesstasters (15) relativ zu der Oberfläche (F) eines Bauteils (11) umfasst.

11. Verwendung eines Rauheitsmesstasters (15) gemäß einem der Ansprüche 1 - 9 zum Messen der Oberflächenrauheit der Zahnflanken von Zahnrädern (11), so, dass ein Lichtstrahl (LS) der optische Abtastvorrichtung (30) in Richtung einer der Zahnflanken gesendet und dort zurück in Richtung der optischen Abtastvorrichtung (30) reflektiert wird.

## Claims

1. Roughness measurement probe (15) for scanning a surface (F), comprising an integratingly operating device (20) and an optical scanning device (30), wherein the optical scanning device (30) is arranged directly on or in the integratingly operating device (20), wherein the integratingly operating device (20) is designed, when scanning the surface (F), to predetermine a mean distance between the roughness measuring probe (15) and a larger region of the surface (F), and wherein the optical scanning device (30) is designed to optically scan a smaller region of the surface (F) in a contactless manner, wherein the integratingly operating device (20) comprises an optical arrangement which is designed as a virtual skid in such a way that it images a light spot (LF) on the surface (F).

2. Roughness measurement probe (15) according to claim 1, **characterized in that** the optical arrangement is designed to image at least two light spots (LF) on the surface (F) in such a way that a reference line or reference plane (B) of the roughness measurement probe (15) can be positioned equidistantly.

3. Roughness measuring probe (15) according to claim 1, **characterized in that** the optical scanning device (30) is designed to optically scan the smaller region of the surface (F) in a contactless manner after the equidistant positioning.

4. Roughness measurement probe (15) according to claim 1, **characterized in that** it comprises a controller which, when the roughness measurement probe (15) is moved relative to the surface (F), keeps it in an equidistant position.

5. Roughness measurement probe (15) according to one of claims 1 to 4, **characterized in that** the optical scanning device (30) is designed as a chromatic confocal sensor device comprising a light source (23) for emitting white light, a lens arrangement (24) for differently focusing different wavelength ranges of the white light, and a spectrometer (25) for evaluating light of at least one wavelength reflected from the surface (F).

6. Roughness measurement probe (15) according to one of claims 1 to 4, **characterized in that** the optical scanning device (30) is designed according to the triangulation principle and comprises a (laser) light source (23) for emitting a light beam (LS) and a detector (26) arranged at a distance for receiving a light beam (LS) which has been reflected by the surface (F).

7. Roughness measuring probe (15) according to claim 6, **characterized in that** the optical scanning device (30) comprises a lens (24) and/or a mirror (27) and/or a prismatic optical element (28).

8. Roughness measuring probe (15) according to any one of claims 1 to 7, **characterized in that** the sliding skid (21) is arranged in the region of the extremal end of a probe arm (29) which has a longitudinal extension parallel to a longitudinal axis (LA).

9. Roughness measurement probe (15) according to claim 8, **characterized in that** the optical scanning device (30) is adapted to emit a light beam (LS) in a direction which extends perpendicularly or obliquely or parallel to the longitudinal axis (LA).

10. Coordinate measuring system (10) having a roughness measurement probe (15) according to one of claims 1 to 9, wherein the coordinate measuring system (10) comprises at least one NC-controlled axis for moving the roughness measurement probe (15) relative to the surface (F) of a component (11).

11. Use of a roughness measurement probe (15) according to one of claims 1 to 9 for measuring the surface roughness of tooth flanks of gears (11) such that a light beam (LS) of the optical scanning device (30) is transmitted in the direction of one of the tooth flanks and reflected back there in the direction of the optical scanning device (30).

## Revendications

1. Tête de mesure de rugosité (15) pour balayer une surface (F) comprenant un dispositif intégrateur (20) et un dispositif de balayage optique (30), le dispositif de balayage optique (30) étant agencé directement sur ou dans le dispositif intégrateur (20), le dispositif intégrateur (20) étant conçu, lors du balayage de la surface (F), pour donner un écart moyen entre la tête de mesure de rugosité (15) et une grande partie de la surface (F), et le dispositif de balayage optique (30) étant conçu pour balayer optiquement sans contact une petite zone de la surface (F), le dispositif intégrateur (20) comprenant un agencement optique conçu comme un sabot virtuel de sorte que ce dernier reproduit un point lumineux (LF) sur la surface (F).

2. Tête de mesure de rugosité (15) selon la revendication 1, **caractérisée en ce que** l'agencement optique est conçu pour reproduire au moins deux points lumineux (LF) sur la surface (F) de façon à pouvoir positionner de façon équidistante une ligne de référence ou un plan de référence (B) de la tête de mesure de rugosité (15).

3. Tête de mesure de rugosité (15) selon la revendication 2, **caractérisée en ce que** le dispositif de balayage optique (30) est conçu, après positionnement de façon équidistante, pour balayer optiquement sans contact la petite zone de la surface (F).

4. Tête de mesure de rugosité (15) selon la revendication 2 ou 3, **caractérisée en ce que** cette dernière comprend une commande qui, lors du déplacement de la tête de mesure de rugosité (15) par rapport à la surface (F), la maintient dans une position équidistante.

5. Tête de mesure de rugosité (15) selon l'une des revendications 1 à 4, **caractérisée en ce que** le dispositif de balayage optique (30) est conçu sous la forme d'un dispositif de capteur confocal chromatique qui comprend une source lumineuse (23) pour émettre de la lumière blanche, un agencement de lentilles (24) pour focaliser de différentes façons les différentes gammes de longueurs d'ondes de la lumière blanche, et un spectromètre (25) pour analyser la lumière d'au moins une longueur d'ondes réfléchie par la surface (F).

6. Tête de mesure de rugosité (15) selon l'une des revendications 1 à 4, **caractérisée en ce que** le dispositif de balayage optique (30) est conçu suivant le principe de triangulation et comprend une source lumineuse (laser) (23) pour émettre un faisceau lumineux (LS) et un détecteur agencé à distance (26) pour recevoir un faisceau lumineux (LS) réfléchi par la surface (F).

7. Tête de mesure de rugosité (15) selon la revendication 6, **caractérisée en ce que** le dispositif de balayage optique (30) comprend une lentille (24) et/ou un miroir (27) et/ou un élément optique prismatique (28).

8. Tête de mesure de rugosité (15) selon l'une des revendications 1 à 7, **caractérisée en ce que** le sabot (21) est agencé dans la zone de l'extrémité d'un bras de palpage (29) qui s'étend longitudinalement de façon parallèle à un axe longitudinal (LA).

9. Tête de mesure de rugosité (15) selon la revendication 8, **caractérisée en ce que** le dispositif de balayage optique (30) est conçu pour émettre un faisceau lumineux (LS) dans une direction qui s'étend de façon perpendiculaire, oblique ou parallèle par rapport à l'axe longitudinal (LA).

10. Système de mesure de coordonnées (10) comprenant une tête de mesure de rugosité (15) selon l'une des revendications 1 à 9, le système de mesure de coordonnées (10) comprenant au moins un axe à commande numérique pour déplacer la tête de mesure de rugosité (15) par rapport à la surface (F) d'un élément (11).

11. Utilisation d'une tête de mesure de rugosité (15) selon l'une des revendications 1 à 9 pour mesurer la rugosité de surface des flancs de dent de roues dentées (11) de sorte qu'un faisceau lumineux (LS) du dispositif de balayage optique (30) soit émis en direction d'un des flancs de dent et que ce dernier soit réfléchi en direction du dispositif de balayage optique (30).
